Europäisches Patentamt

European Patent Office

Office européen des brevets

(11) Publication number: **0 146 335**
A2

# (12) EUROPEAN PATENT APPLICATION

(21) Application number: **84308621.6**

(22) Date of filing: **12.12.84**

(51) Int. Cl.⁴: **H 04 N 5/64,** H 04 N 3/12, G 02 F 1/133

(30) Priority: **13.12.83 JP 191830/83**
**20.12.83 JP 240537/83**

(43) Date of publication of application: **26.06.85**
**Bulletin 85/26**

(84) Designated Contracting States: **CH DE FR GB IT LI NL SE**

(71) Applicant: **Citizen Watch Co.Ltd., 2-1-1 Nishi-Shinjuku, Shinjuku-Ku Tokyo (JP)**

(72) Inventor: **Tsuzuki, Akira c/oWatch Co.,Ltd, Technical Laboratory 840 Takeno Shimotomi, Tokorozawa-shi Saita-ken (JP)**
Inventor: **Yoshida, Masaru c/o Watch Co.,Ltd. Tech.Lab., 840 Takeno Shimotomi, Tokorozawa-shi Saitama-ken (JP)**

(74) Representative: **Purvis, William Michael Cameron et al, D. Young & Co. 10 Staple Inn, London WC1V 7RD (GB)**

(54) Liquid crystal television receiver.

(57) A portable liquid crystal television receiver has a liquid crystal television display portion (318) of the light transmission type having a liquid crystal panel and at least one polarizing plate provided on the panel, and a body (300) having a power supply source and a television signal processing circuit, the body (300) having a mirror (316) on its upper surface and opposite to the display portion (318) in a manner such that when the display portion (318) is opened at an acute angle to the mirror (316) a virtual image of the display portion (318) can be viewed in the mirror.

1

## "LIQUID CRYSTAL TELEVISION RECEIVER"

The invention relates to a television receiver and more particularly to a television receiver having a liquid crystal panel display.

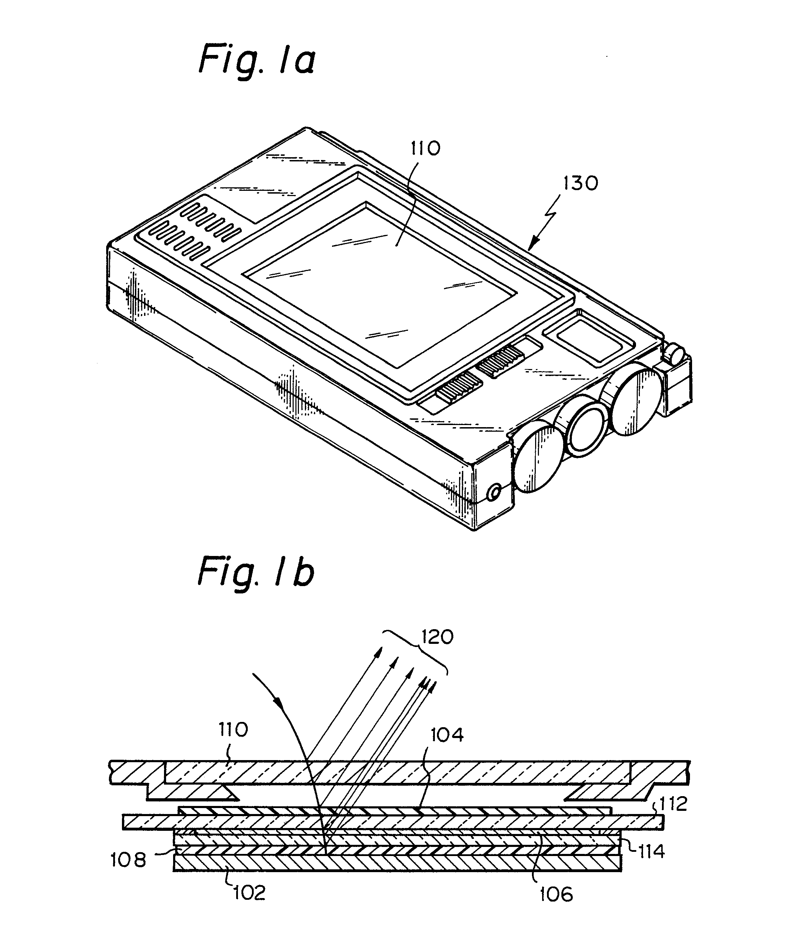

Conventional portable television receivers having a liquid crystal panel have, as shown in Figures 1a and 1b of the accompanying drawings, an irregular reflection plate 102 at the rear side thereof or a back light type liquid crystal panel comprising an EL cell or a fluorescent lamp at the rear side thereof. In such a television receiver there is a substantial difference between the contrast calculated from the optical characteristic of the liquid crystal and the contrast actually apparent to the user, and under some circumstances that actually apparent to the user can be greatly decreased. The reasons thereof are as follows.

(A)    In a television receiver having a reflection type panel the light transmitted through a first polarizing plate 104, a liquid crystal layer 106, and a second polarizing plate 108 is scattered on a reflection plate 102 and incident on the user's eyes through the second polarizing plate 108, the liquid crystal layer 106 and the first polarizing plate 104. In this case about half of the light energy is absorbed by the plate 104 and about half of the residual light energy is absorbed by the plate 108 after scattering. If rotation of the polarizing plane is not sufficient at the liquid crystal layer 106 the light energy is subjected to an absorption 10 to 20% after passing the light twice through the layer 106 so that the light reflected from the white picture portion becomes gray instead of white resulting in darkening of the whole picture.

(B)    In order to display gradation the voltage supplied to the liquid crystal layer 106 is set to an intermediate value between white and black so that the liquid crystal molecules become inclined in a semihelical form instead of complete upright.   This causes a narrow visual angle characteristic as compared with display without gradation such as in a watch. This narrow visual angle characteristic, i.e., narrow range of preferable visual angle, sometimes generates even an inversion of white and black for the light incident on the reflection surface at a certain angle. The light incident on the reflection surface at an oblique angle reaches the reflection surface without having desired gradation, so that a picture with decreased or irregular gradation generates on the scattering reflection plate 102 and thus the user views a superimposition of the reflected picture and a picture with correct gradation generated on the liquid crystal layer. In practice the user views not the picture with gradation at the optimum visual angle for the liquid crystal, but the poorer picture with mean gradation within a certain solid angle. If the television receiver is used under a spot light with high brightness the picture on the scattering reflection plate 102 is deviated from the picture on the liquid crystal layer 106 due to parallax, so that the border of the object forming the picture becomes obscure. If the direction of the spot light source corresponds to the direction in inversion of white and black, brightness of images on the liquid crystal layer is cancelled by that of the inversed reflected image resulting in a worse gradation.

(C)   As shown in Figure 1b surface reflections 120 are generated from both surfaces of a wind screen 110, the polarizing plates 104, 108, and upper and lower glasses 112, 114, respectively, resulting in a projection of an external scene on the picture surface. Particularly, the black portion of the picture becomes white, so that the picture disappears due to projection of the sky on the whole reflection surface in the case of using the television receiver outdoors and even indoors it is hard to view the picture since illumination on the ceiling is projected on the reflection surface.

(D)   In case of viewing the television receiver 130 at the preferred visual angle by controlling the direction thereof the user is subjected to the limitation under the circumstances of external light so that it is very hard to find the preferred visual angle. The user, therefore, tends to view the television device at the angle of worse gradation or worse contrast against his will or without taking the visual angle into consideration.

(E)   In a television receiver having a back light type panel, even though the darkness of picture surface shown in the above defect (A) can slightly be compensated effectively in a dark place, a back light with high light intensity must be used in a bright place. EL is not sufficient as such a back light. If a fluorescent lamp is used as the back light, a power of more than just a few watts is necessary, so that it is difficult to obtain energy from a portable cell and the back light type of television receiver is thus not preferred for use outdoors.

(F)     A square pulse having short rise time and short fall time must be used as a liquid crystal driving signal in order to hold correct gradation. In case of charging and discharging capacitances for the liquid crystal layer 106, abrupt pulse currents flow through the drive circuits, the harmonics thereof being even hundreds of $MH_2$. In a back light type television receiver the power cell supplies the current to the drive circuit through a step-up transformer because of utilization of EL or the fluorescent lamp. This drive current includes a number of harmonic components. In a portable television receiver the liquid crystal panel must be arranged near the tuner and the IF amplifier circuit, so that these harmonics act on the video signals as a noise resulting in interference on the picture.

(G)     One of the upper and lower glasses for the liquid crystal cell has drive electrode at its inner surface and a colour filter at its outer surface so that the liquid crystal layer and the colour filter are separated from each other by the thickness of the glass. This causes an irregular colour of the picture cell when the panel is shown in the inclined direction.

It is among the objects of the invention to provide a liquid crystal television receiver the picture of which can be easily viewed.

According to the invention there is provided a liquid crystal television receiver characterised by a liquid crystal television display portion of a light transmission type having a liquid crystal panel and at least one polarizing plate provided on the panel, and a body having a power supply source and a television signal processing circuit, the body having a mirror on its upper surface and opposite to the display portion in a manner such that the display portion can be set at an acute angle to the mirror and a virtual image of the display portion can be viewed in the mirror.

The body and the display portion are preferably connected by an opening and closing mechanism so as to be capable of opening and closing. The body and the display portion can be connected by links or a hinge, or a frame of the body and the panel frame can be integrally formed of a plastics material so that a thin connection portion of the body frame and the panel frame serves as a flexible hinge. The body preferably has at a centre portion a recess for receiving the display portion when the receiver is not in use. An angle $\theta$ between the body and the display portion is advantageously in a range of 30 to 60 degrees, preferably 40 to 55 degrees. Driving circuits for driving the liquid crystal panel are preferably provided on the side of the liquid crystal display portion separate from the signal processing circuits.

The liquid crystal television display portion preferably further comprises at least one windscreen, a panel frame for holding the liquid crystal panel, and a light scattering plate provided at the rear surface of the liquid crystal. The polarizing plate placed at the mirror side is preferably so arranged that the polarizing direction of the polarizing plate is in a range of zero to 45 degrees to a common normal plane including a line normal to the surface of the polarizing plate and a line normal to the mirror surface.

The invention is diagrammatically illustrated by way of example with reference to the accompanying drawings, in which:-

Figure 1a is a perspective view showing a television receiver of known kind;

Figure 1b is a cross sectional view showing a liquid crystal panel of the television receiver of Figure 1;

Figure 2 is a typical block diagram of a liquid crystal television receiver;

Figure 3 is a perspective view showing one embodiment of a liquid crystal television receiver according to the invention;

Figure 4 is a partial cross sectional side view of the television receiver of Figure 3;

Figure 5 is a side view showing an opening and closing mechanism of the television receiver of Figure 3;

Figures 6 and 7 show modifications of the opening and closing mechanism of Figure 5;

Figure 8 is a perspective view showing the relationship between polarizing direction of a polarizing plate and surface reflection at a mirror surface;

Figure 9 is a diagram showing specular reflectivity of the mirror; and

Figure 10 is a partial cross sectional side view of a liquid crystal television receiver according to the invention with an auxiliary back light source.

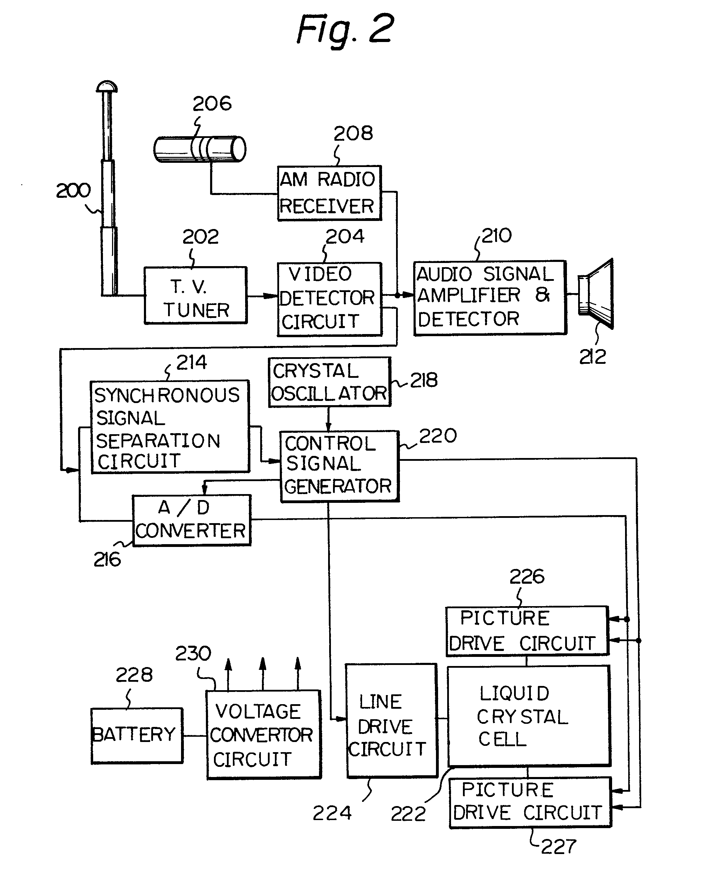

Figure 2 shows a block diagram of a circuit of a liquid crystal television receiver. Signals received on a television antenna 200 are processed in circuits 202 and 204 which are sensitive to electric noise. The circuit 202 is a television tuner by which the desired broadcast signal is separated from television signals received through the antenna 200 thereby generating signals with intermediate frequency. The circuit 204 is a video signal amplifier and detector circuit by which IF signals are amplified and detected. An AM radio core antenna is coupled to an AM radio receiver 208. An audio signal amplifier and detector circuit 210 for amplifying and detecting audio signals of television or AM radio receiver is coupled to a loudspeaker 212. A synchronizing separator circuit 214 is provided for detecting timing of the synchronizing signal from the video signals and an A/D converter circuit 216 is provided for converting the luminance level of the video signal into a digital value. A crystal oscillator 218 feeds a control signal generator 220 for generating strobe signals for A/D converter and for generating clock signals as a reference of the liquid crystal drive signal using the signal from the oscillator 218 as a referance clock and signal from the synchronous signal separation circuit 214. A liquid crystal cell 222 is enclosed between upper and lower glass plates. A line drive circuit 224 is provided for driving line electrodes provided on one glass plate of the cell. Picture drive circuits 226 and 227 drive electrodes provided on the other plass plate in accordance with video levels. A battery 228 powers a voltage converter circuit 230.

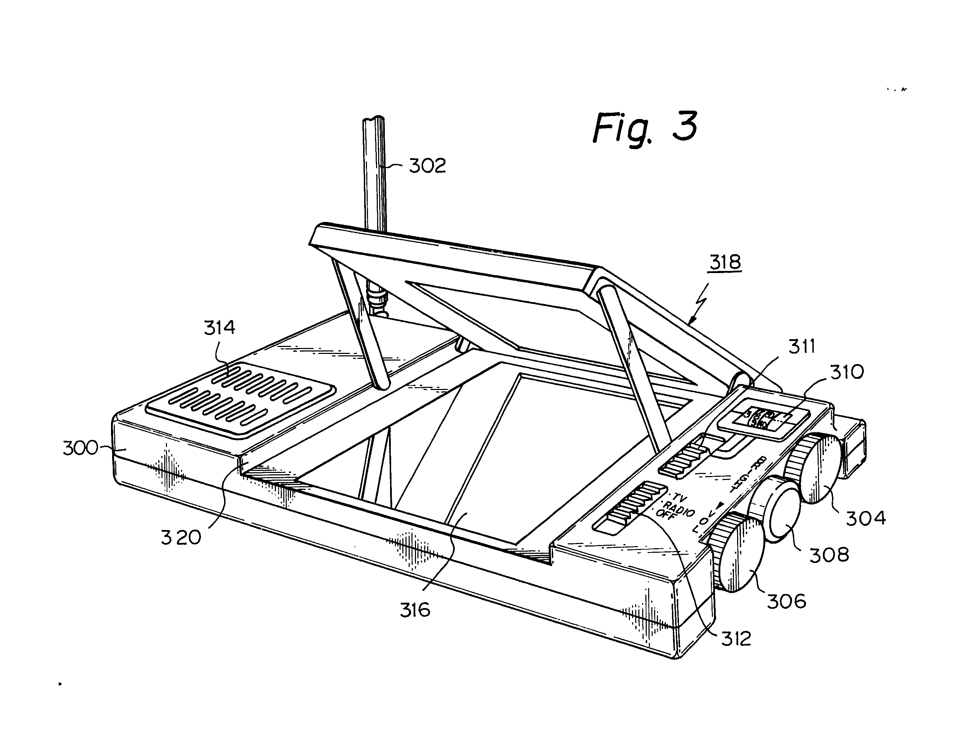

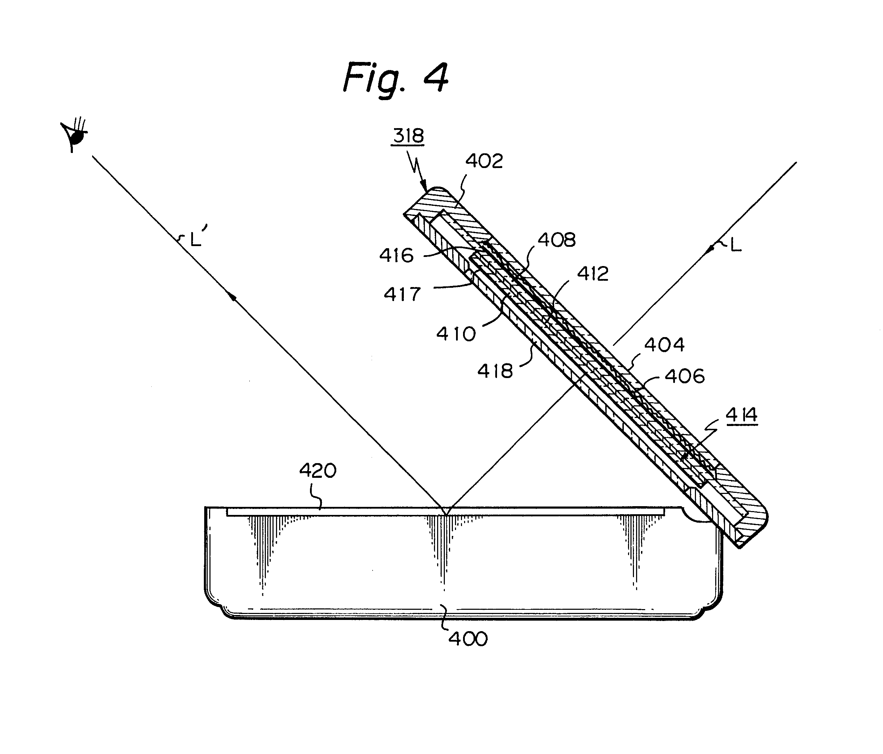

Figure 3 is a perspective view showing a liquid crystal television receiver and shows that a body 300 of the television receiver has at the left hand side a telescopic television antenna 302 and at the right hand side a tuning control 304, a volume control 306, a brightness control 308, a tuning indicator 310, a television band change-over switch 311 and a power switch 312. As shown in Figures 2 and 3 the body 300 contains the television tuner 202, the video signal amplifier and detector circuit 204, the audio signal amplifier and detector circuit 210, the loudspeaker 212 positioned at a speaker opening 314, the AM core antenna 206, the AM receiver circuit 208, the synchronous signal separation circuit 214, the A/D converter circuit 216, the control signal generator 220, the crystal oscillator 218, the battery 228 and the voltage convertor circuit 230. A mirror 316 is mounted in a recess 320 provided at the middle of the body 300. A liquid crystal television display portion 318 is shown in Figure 4 in cross section. The liquid crystal television display portion 318 comprises a panel frame 402, an upper windscreen 404, a light scattering plate 406, an upper glass 408, a lower glass 410, a liquid crystal cell 414 comprising a liquid crystal layer 412 enclosed between the glasses 408, 410, polarizing plates 416, 417 provided at the upper surface of the glass 408 and the lower surface of the glass 410 respectively, and a lower windscreen 418. Also included, although not shown in Figure 4, are the line drive circuit 224 and the picture drive circuits 226, 227. The display portion 318 may include the crystal oscillator 218, the control signal generator 220, the synchronous signal separation circuit 214 and the A/D converter circuit 214. The body 300 and the display portion 318 are connected by flexible conductor wires for conveying electric signals and supply power. These wires are shielded by a flexible conductor.

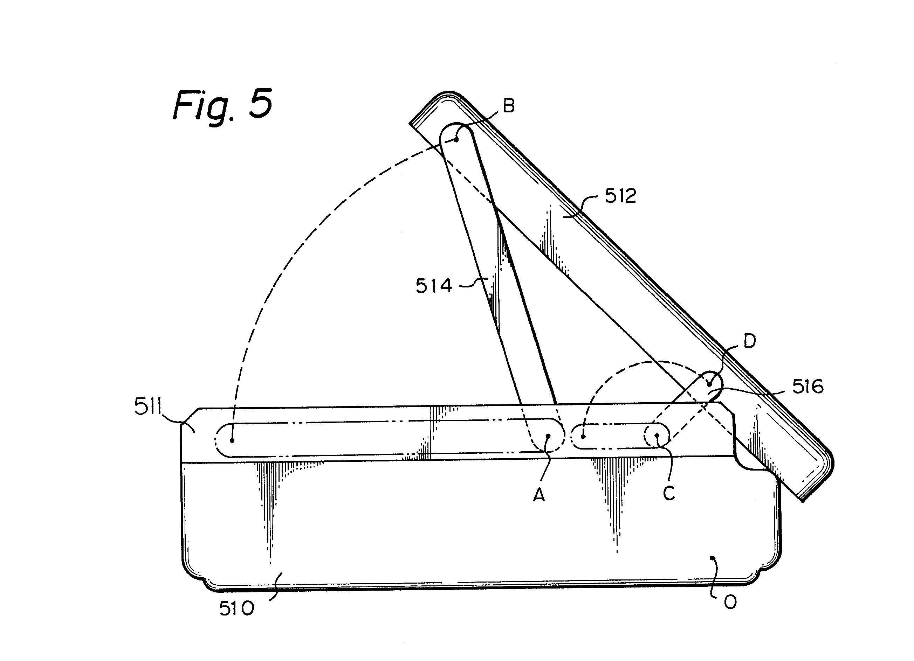

Figure 5 shows an opening and closing mechanism for the liquid crystal television receiver. As shown in Figure 5, a body 510 of the television receiver and a liquid crystal television display portion 512 are connected by a first link 514 and a second link 516 so as to be capable of opening and closing. The link 514 has one end portion rotatably connected to the body 510 at a centre of rotation A and the other end portion rotatably connected to the display portion 512 at a centre of rotation B. The link 516 has one end portion rotatably connected to the body 510 at a centre of rotation C and the other end portion rotatably connected to the display portion 512 at a centre of rotation D. 511 is a portion of the body 510. When the television receiver is not in use the display 512 can be engaged in the recess 320 of the body 510 so that the display portion 512 is at the same level at the top 511 of body portion 510.

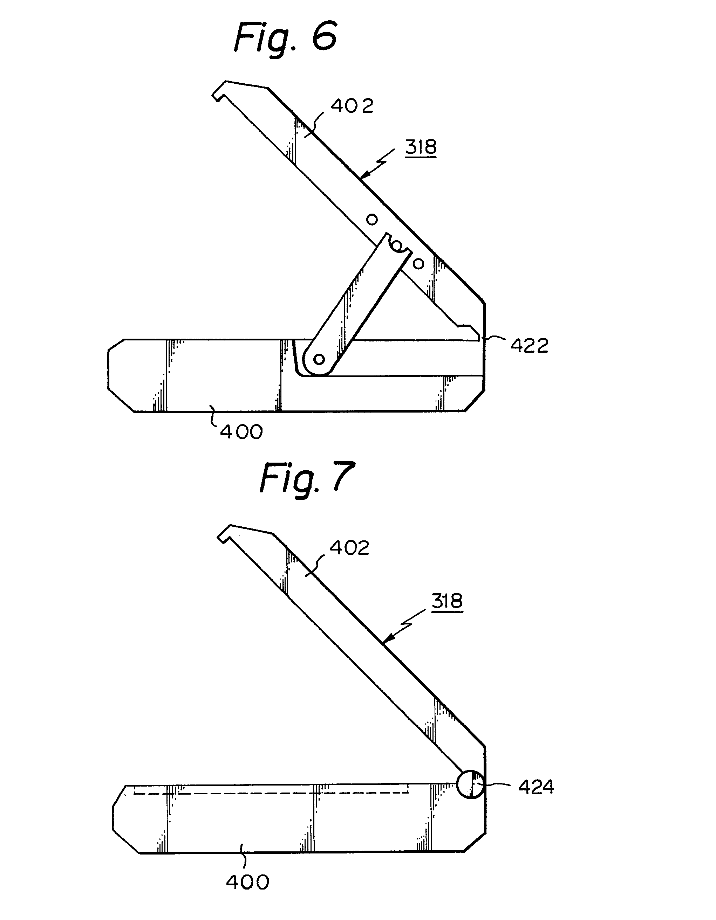

As shown in Figure 6 the body 400 and the frame 402 for the display portion 318 may be formed with an integral hinge 422 of a flexible material such as a plastics.

As shown in Figure 7, the body 400 and the frame 402 for the display portion 318 may be rotatably connected by a hinge 424.

In the above construction, as shown in Figure 4, external light L is transmitted through the upper windscreen 404, the light scattering plate 406, the liquid crystal cell 414 and the lower windscreen 418 and reflected from the mirror 420 as visual reflected light L'. In this case even though light energy is absorbed by the first polarizing plate 416 by 50% and the second polarizing plate 417 by 10 to 20% the residual light energy is larger than in a conventional device of the reflection type.

The user views the liquid crystal display in the mirror whereby the viewing angle is naturally limited to the narrow preferable viewing angle which is designed to give good contrast by arrangement of directions of alignment treatments of liquid crystal display cell and directions of polarization of polarizers.

The external bright light is shielded by the panel frame 318, the body 400 and the body of user, so that reflections at the lower windscreen and the lower glass plate are not obtrusive. Particularly, if the angle between the liquid crystal cell and the mirror is set at an angle slightly larger than 45 degrees, the reflected image within the field of view is covered by the body of user, so that strong spot reflection is not generated and a clear black portion of the picture can be viewed resulting in a substantial improvement of contrast. When used in bright external light, the bright picture is displayed and when used in darker external light, the picture is darker, whereby the brightness of picture is always comfortable to the eyes tamed to the intensity of external light, so that a preferred picture can always be seen without particular adjustment.

No EL and fluorescent lamp are incorporated in or fixed to the display portion so that interference or noise caused by large current pulses for driving light source are not induced in the audio amplifier circuit and video signal. Moreover, the liquid crystal cell, the line drive circuit and the picture drive circuit and the television device body 300 comprises therein the tuner and the video signal amplifier circuit. The body and the display portion are separated from each other and thus the influence of noises caused by sharp pulse current flowing through the liquid crystal cell on the tuner or the video signal amplifier and detector circuit can be substantially decreased and thus the shielding of the diplay portion becomes easy.

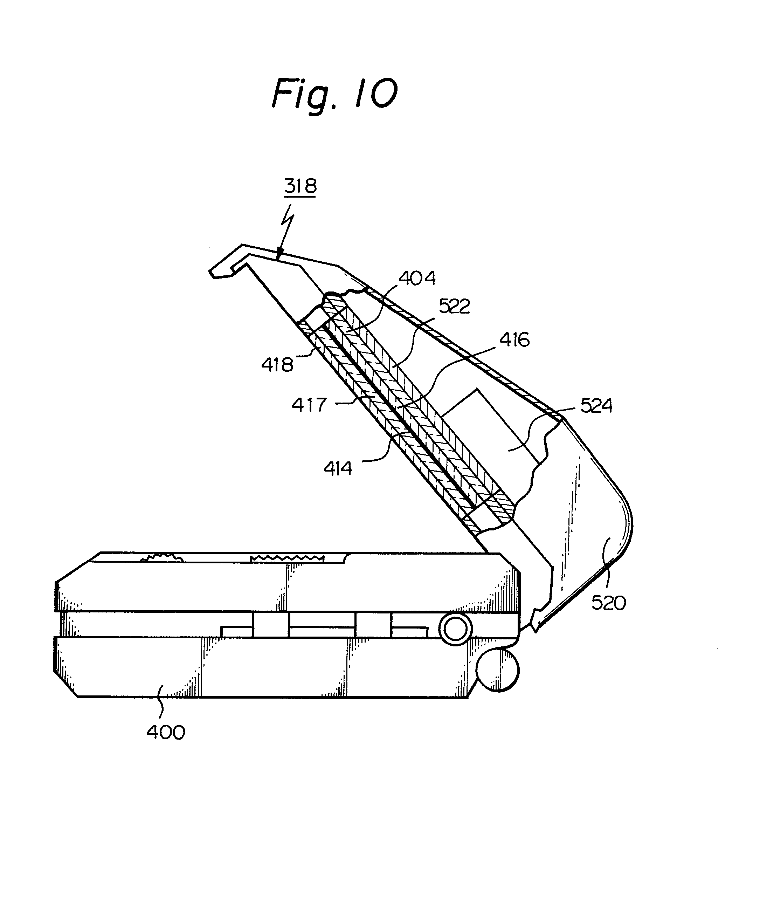

When the liquid crystal television receiver is used at night, an auxiliary back light source 520 may, as shown in Figure 10, be detachably arranged on the display portion 318. The back light source 520 comprises an EL element 522 and a supply power source 524.

The back light is required only when external light is extremely weak, and since the time during which external light is extremely weak is likely to be comparatively short, it is sufficient to illuminate the display portion by a weak light. Therefore, only small power and short utilization time of the weak back light are necessary, permitting use of a small power supply cell and small and less weight construction of the television device.

Furthermore, the back light is separated from the body including the television signal processing circuits and the current for the illumination need only be small. Therefore there is little resulting noise interference on the television signal processing circuits of the body.

If the invention is applied to a colour liquid crystal television receiver, the colour liquid crystal panel is formed by providing drive electrodes on the inner surface of either one of upper and lower glass plates for enclosing the liquid crystal cell therein and providing a colour filter on the outer surface thereof, so that it is possible to prevent the liquid crystal and dyes in the colour filter from deteriorating due to chemical and electrochemical interaction and it is not necessary to provide high voltage for liquid crystal by separation fo a transparent electrode and a liquid crystal with the colour filter.

The recess 320 in the middle of the body portion for receiving the display portion during non-utilized conditions of the television device can result in a convenience for portable use and in preventing a closing and opening mechanism for connecting the display portion with the body from being destroyed by shock.

The body and the display portion are, in the embodiment of Figure 5, connected by the links 514 and 516 which serve four nodal link mechanism giving rotation substantially around a centre O so that the liquid crystal display portion cannot only be rotated but also moved backwards thereby completely displaying the upper end portion of the picture when opening the display portion even though the centre of the mirror is substantially coincident with that of the liquid crystal cell under the closing condition of the display portion, resulting in a television receiver of small thickness.

The reflection mechanism of a mirror comprises a reflection at the mirror surface and a reflection at the rear metal coated surface of the mirror. It is desirable that the light reflected on the mirror surface should be decreased as much as possible since the sharpness of the picture is decreased by such a reflected light.

In conventional liquid crystal display devices inevitable reflection at the mirror surface causes some dullness of the picture.

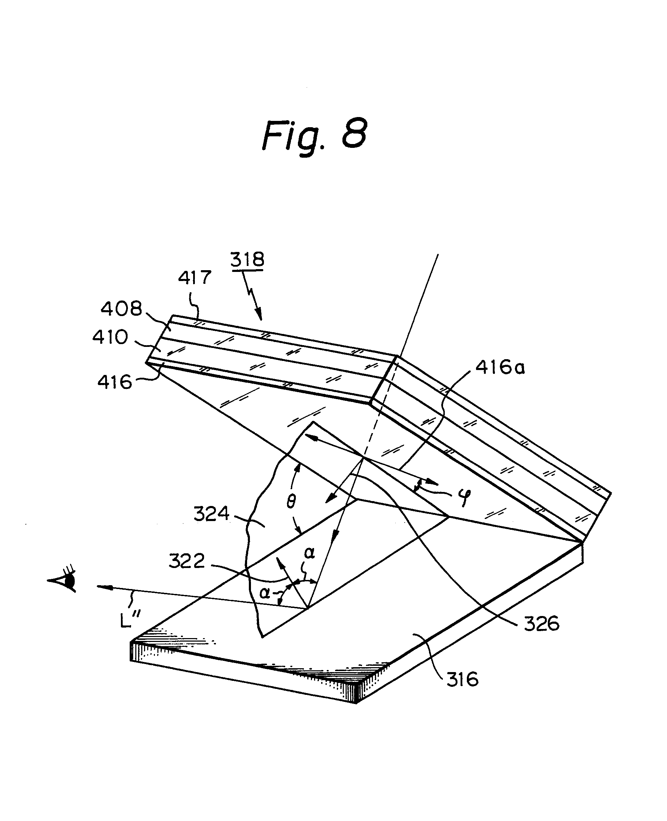

To sharpen the image the reflection factor at the mirror surface should be decreased. With reference to Figure 8, the polarizing plate 416 is preferably so arranged on the mirror side of the display that the polarizing direction 416a of the polarizing plate 416 is at a polarising angle $\varphi$ in the range zero$^o$ to 45$^o$ to a common plane 324 which includes a line 326 normal to the surface of the polarizing plate 416 and a line 322 normal to the mirror surface 316. A reflection angle $\alpha$ exists between the visual line L" and the line 322.

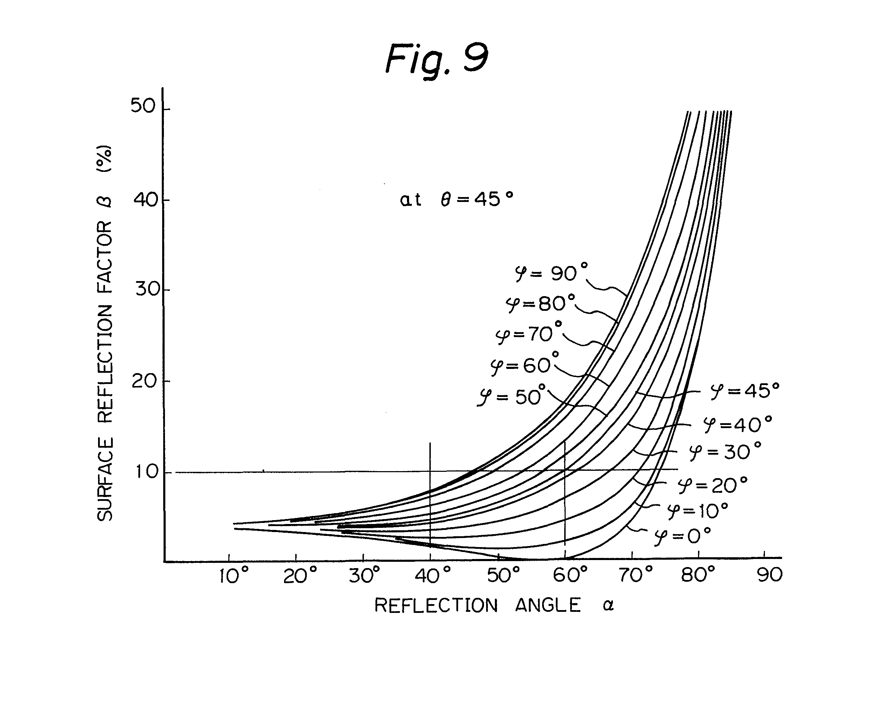

The angle $\varphi$ was changed by 10 degrees between zero and 90 degrees and the surface reflection factor $\beta$ of the mirror 316 was measured for the reflection angle $\alpha$ . The result thereof is shown in Figure 9.

Figure 9 shows the result measured when the relative angle $\theta$ of the mirror 316 and the liquid crystal panel 318 is 45 degrees. Even through $\theta$ is varied from 30 to 60 degrees the relation between $\varphi$ and $\beta$ is, as shown in Figure 9, particularly constant.

When $\theta$ and $\alpha$ are 40 to 60 degrees, respectively, and when $\varphi$ is from 0 to 45 degrees particularly sharp image can be obtained, since the surface reflection factor $\beta$ is below 10%.

## CLAIMS

1.  A liquid crystal television receiver characterised by a liquid crystal television display portion (318) of a light transmission type having a liquid crystal panel (414) and at least one polarizing plate (416, 417) provided on the panel (414), and a body (300, 400, 510) having a power supply source (228, 230) and a television signal processing circuit (202, 204), the body (300, 400, 510) having a mirror (316, 420) on its upper surface and opposite to the display portion (318) in a manner such that the display portion (318) can be set at an acute angle to the mirror (316, 420) and a virtual image of the display portion (318) can be viewed in the mirror (316, 420).

2.  A liquid crystal television receiver according to claim 1, wherein the liquid crystal television display portion (318) further comprises at least one windscreen (404, 418), a panel frame (402) for holding the liquid crystal panel (414), and a light scattering means (406) provided at the rear surface of the liquid crystal (414).

3.  A liquid crystal television receiver according to claim 1, wherein the polarizing plate (416) placed at the mirror side is so arranged that the polarizing direction of the polarizing plate (416) is in a range of zero to 45 degrees to a common normal plane (324) including a line (326) normal to the surface of the polarizing plate (416) and a line (322) normal to the mirror surface (316).

4.  A liquid crystal television receiver according to claim 2, wherein the polarizing plate (416) placed at the mirror side is so arranged that the polarizing direction of the polarizing plate (416) is in a range of zero to 45 degrees to a common normal plane (324) including a line (326) normal to the surface of the polarizing plate (416) and a line (322) normal to the mirror surface (316).

5.  A liquid crystal television receiver according to claim 1, wherein the body (300, 400, 510) and the display portion (318) are connected by a link mechanism (514, 516).

6.    A liquid crystal television receiver according to claim 1, wherein the body (300, 400, 510) and the display portion (318) are connected by a hinge in the manner to permit opening and closing of the display portion (318).

7.    A liquid crystal television receiver according to claim 2, wherein a frame of the body (400) and the panel frame (402) are integrally formed of a plastics material so that a thin connection portion (422) of the body frame (400) and the panel frame (402) serves as a flexible hinge.

8.    A liquid crystal television receiver according to claim 1, wherein the body (300) has at a centre portion thereof a recess (320) for receiving the display portion (318) under non-used condition of the device.

9.    A liquid crystal television receiver according to claim 1, wherein an angle $\theta$ between the body (300, 400, 510) and the display portion (318) is in a range of 30 to 60 degrees, preferably 40 to 55 degrees.

10.    A liquid crystal television receiver according to claim 1, wherein driving circuits (224, 226, 227) for driving the liquid crystal panel (414) are provided in the liquid crystal display portion (318) separate from the signal processing circuits (202, 204).

*Fig. Ia*

*Fig. Ib*

Fig. 2

# Fig. 3

302

318

314

311

310

300

304

308

320

306

316

312

TV
RADIO
OFF

Fig. 4

318

402 408 412 404 406 L

416 417 410 418 414

L'

420 400

Fig. 5

## Fig. 6

402

318

422

400

## Fig. 7

402

318

424

400

## Fig. 8

Fig. 9

at $\theta = 45°$

$\varphi = 90°$
$\varphi = 80°$
$\varphi = 70°$
$\varphi = 60°$
$\varphi = 50°$
$\varphi = 45°$
$\varphi = 40°$
$\varphi = 30°$
$\varphi = 20°$
$\varphi = 10°$
$\varphi = 0°$

SURFACE REFLECTION FACTOR $\beta$ (%)

REFLECTION ANGLE $\alpha$

# Fig. 10

318

404

522

416

418

524

417

414

520

400